# EUROPEAN PATENT APPLICATION

(11) **EP 4 497 783 A1**
(43) Date of publication of application: **29.01.2025**
(21) Application number: 23188811.6
(22) Date of filing: 31.07.2023
(51) Int. Cl.: C08L 67/04, A01K 61/13

(54) **POLYMERIC MATERIAL FOR AQUACULTURE, PRODUCTION METHOD AND USES THEREOF**

(30) Priority: 28.07.2023 PT 2023118845
(71) Applicant: Universidade de Aveiro, 3810-193 Aveiro (PT); CIIMAR - Centro Interdisciplinar de Investigação Marinha e Ambiental, 4450-208 Matosinhos (PT); Riasearch, Lda, 3880-394 Ovar (PT); Silva & Ventura Tornearia Mecanica Lda, 3740-176 Rocas do Vouga (PT)
(72) Inventor: MARCIAL GOMES, NEWTON CARLOS, 3810-193 AVEIRO (PT); Machado e Silva, Davide Augusto, 3810-193 Aveiro (PT); de Oliveira Louvado, António Miguel, 3810-193 Aveiro (PT); Richard Cleary, Daniel Francis, 3810-193 Aveiro (PT); Santos Neto, Victor Fernando, 3810-193 Aveiro (PT); de Almeida Ozório, Rodrigo Otávio, 4450-208 Matosinhos (PT); Miranda Rocha, Rui Jorge, 3880-394 Ovar (PT); Almeida Silva, Helder Fernando, 3740-176 Rocas do Vouga (PT)
(74) Representative: Patentree

(57) **Abstract**

The present disclosure concerns an extruded biodegradable material for aquaculture, which comprises at least one biodegradable polymer and at least one functional additive. The production method of the biodegradable material, as well as articles comprising said material, are also disclosed. An aspect of the present invention comprises an extruder for obtaining the extruded biodegradable material.

## Description

### TECHNICAL FIELD

The present disclosure concerns materials for aquaculture treatments, namely microbiome manipulation and biological water treatment. In particular, the disclosure concerns a polymeric mesh for control and suppression of pathogens in aquaculture systems.

### BACKGROUND

In light of the need to increase fish production, technologies for intensive aquaculture systems have rapidly evolved. These systems can maximize production under highly controlled conditions in relatively small areas. Especially in the case of recirculating aquaculture systems (RAS), there is the advantage of enabling a more efficient and sustainable use of water by allowing the recirculation of water due to its treatment (for example, biological filtration, ultraviolet and ozone treatments). Therefore, these technological advances have contributed to increased productivity in aquaculture systems all over the world. However, intensive production requires high density fish breeding, which can adversely affect the health and welfare of animals. For example, they may be subjected to stressful conditions, or poor water quality due, for example, to elevated levels of ammonia, nitrite, nitrate and other contaminants, low exposure to natural environmental stimuli such as sunlight and natural organic substances, and greater exposure to pathogens and diseases. Contributing to the increase of more rapid and severe disease outbreaks, as well as the appearance of emerging pathogens.

Aquaculture systems can also be impacted by the unpredictability of the microbiome. Although existing technology enables the control of a wide range of zootechnical parameters and seeks to minimize major changes to the cultivation environment, these systems, generally with high densities of organisms, are vulnerable to small errors or failures causing large-scale imbalances. Sudden changes to the environment, water quality, temperature, or diet can alter the balance of microorganisms present and adversely affect animal health and welfare. Additionally, even in healthy conditions and without prevalent diseases, the microbiome of these systems is characterized by the ubiquitous presence of potentially disease-causing pathogens [1]. It is currently known that the remarkable persistence of some pathogens in aquaculture is due to their ability to colonize biofilms naturally present in production systems (for example, in biofilters and tank surfaces), which gives them a selective advantage, increasing their ability to persist in the environment [2]. Microbial populations in biofilms form complex communities with different abilities to utilize nutrients, to produce molecules for gene regulation and cellular communication, and to resist to antibiotics and various virulence factors. These biofilms develop from micro-colonies that precede the formation of a three-dimensional structure and propagate through maturation, disaggregation and dispersion in the aquatic environment. Disaggregated cells, released through mechanical stress or as a result of a programmed disaggregation process, can transfer pathogens back to bacterioplankton and contribute to the dispersion and reappearance of diseases in cultivation systems.

Currently, diseases are one of the main limitations to the aquaculture growth and affect the sector transversally. Current solutions include, for example, total disinfection of the system or the use of antibiotics with harmful effects to the environment and human health. On the one hand, the disinfection of fish production systems requires the complete interruption of the activity, which can cause significant economic losses due to the stoppage of production. On the other hand, the use of antibiotics can be effective in the short term but can also have undesirable side effects such as, for example, promoting the appearance of more aggressive resistant pathogens, affecting beneficial microbial populations and causing imbalances in the production system. Currently, there is a growing number of studies that seek to solve the problems associated with the occurrence of diseases in aquaculture and promote animal health through the use of functional additives in animal feed or in the water of the production system. In the present invention, the term "functional additives" refers to chemical microbial modulators, phytobiotics, inanimate microbial cells (or their components) and bacteriophages.

A recent study, conducted by Louvado *et al.* [3], presented evidence that the addition of small amounts of humic substances to water (2.5 mg/L) can modulate the microbiome and inhibit the development of potential pathogens (e.g., *Acinetobacter jonhsonii* and *Vibrio harveyi*) in fish mucus. The authors also showed that humic substances contributed to a significant reduction of oxidative stress parameters in fish and to a significant increase in the activity of the digestive enzyme chymotrypsin. Consistent with these results, Meinelt *et al.* [4] showed that humic substances can also contribute to the detoxification of nitrite and non-ionized ammonia (substances toxic to fish) and to improve the constitution of fish embryos by inducing stress resistance. The authors also proposed the use of these substances in recirculating aquacultures (RAS). More recently, Gao *et al.* [5] showed that the supplementation of humic substances in aquaponic systems for tilapia (*Oreochromis niloticus*) contributed to increased fish and lettuce production as well as improvements in water quality through a reduction in the concentration of total ammonia and nitrite. Yamin *et al.* [6] observed that humic substances have potential beneficial effects on carp growth and a protective effect against carp erythrodermatitis, a disease caused by the fish pathogen *Aeromonas salmonicida.* The authors also suggest that the observed protective effect may have occurred due to inhibition of pathogen growth and/or due to stimulation of the carp's adaptive immune system. The study by Leike *et al.* [7] also reported on the benefits of humic substances in increasing fish growth, improved food conversion rates, fish resistance to stress, and improved immune defenses. Previous studies also suggest that inanimate cells of pathogens can be administered orally by injection and immersion to promote the induction of protective immune responses in fish mucosa [8]. Based on the evidence presented so far, several other functional additives can improve aquaculture farming systems by modifying and controlling the microbiome, such as, for example, the use of prebiotics [9], phytobiotics [10], synthetic antibodies [11], dead bacterial cells [12] and bacteriophages [13]. Additionally, by taking advantage of nanoparticles, the effectiveness of functional additives can be improved. Pati *et al.* [14] showed that nanoparticles from inanimate cells can act as oral vaccines, protecting the antigen during gastrointestinal transit and ultimately increasing its absorption. Therefore, the controlled release of inanimate microbial agents (conjugated or encapsulated in polymeric particles) capable of inducing protective immune responses may be a promising strategy for combating diseases in aquaculture.

In short, all previously mentioned studies point to the positive effects of using functional additives on animal welfare and health in aquatic systems. However, interestingly, despite numerous reports on the benefits of using functional additives in modulating the microbiome, and their positive effects on animal health and welfare, there is so far no technology that explores the effects of controlled release of those substances to create a pathogen-suppressing environment in aquaculture systems [15, 16, 17, 18].

Composite materials have been widely used in several areas for the development of innovative technologies. For example, in the development of systems for the controlled release of bioactive substances [19, 20] and production of materials with anti-fouling activity in marine environments [21]. Still as an example, recently, Perez-Soto *et al.* [22] proposed that the physiology of the marine pathogen (*Vibrio cholera*) can be modulated with non-bactericidal synthetic polymers, which alter the pathogen's sensory ability and consequently its ability to adapt to the environment. However, despite the potential of new material-based technologies to release bioactive substances and control the activity of microorganisms, to date no material has been developed that can simultaneously promote microbiome manipulation, nutrient cycling and animal health in an integrated manner in aquaculture systems.

These composite materials can be produced using materials with specific characteristics suitable for the controlled release of functional additives during aquaculture production, such as, for example, biocompatibility, biodegradability, the need for renewal and cost. Strategies based on the controlled release of functional additives into the culture water in aquacultures can have a profound impact on the microbiome of production systems and contribute to fish health. By way of example, composite materials for the controlled release of additives can be easily integrated into biofiltration systems or onto the wall surface of tanks commonly used in RAS systems. These additives can have modulating effects on the microbiome of filter materials and other compartments of the cultivation system (e.g., biofilms, water, and fish). In addition to removing toxic nitrogen compounds, the development of a biofilter with the ability to control the release of chemical microbiome modulators can leverage the introduction of new capabilities to existing biological reactors in biofilters with the potential to suppress the development of opportunistic pathogens, reducing the use of antibiotics and improving animal performance and health.

Alternatively, new composite materials can be used to develop devices that are installed on the surface of aquaculture tank walls (for example, in larviculture and systems that do not use biofilters). These devices can act to release functional additives with the aim of modulating the microbiome of tanks, suppressing the development of pathogens and promoting animal health. Additionally, the material used on the surface of the tanks can be designed with a high surface area. The increase in surface area contributes to the formation of a greater variety of microenvironments in the tanks, favoring the formation of biofilms of more diverse microbial communities. In turn, increased diversity, the proximity of various microbial groups and spatial variation of biofilm architecture can promote functional complementarity, enabling biofilms to capture more nutrients from the environment [23, 24].

Currently, there are many processes available for the production of composite materials based on thermoplastics. For example, document US8231378B2 describes a spinneret for producing superfine fibers of microscopic and sub-microscopic size from multiple materials. This method uses centrifugal force to transform the desired material into superfine fibers by heating the equipment. However, the use of this equipment implies the collection of coarse non-woven fibers and requires several processing steps before it can be used. Furthermore, the described apparatus does not have the capacity to produce porous polymeric meshes, ready to be used when leaving the equipment, nor large polymeric meshes. Another important aspect is that, although different types of extruders can be used to produce porous polymeric meshes through the extrusion process, the cost of those machines is quite high, reaching tens of thousands of euros, in addition to occupying a large physical area ("footprint"). While some smaller models occupy around 5 to 10 square meters, there are larger models that can occupy considerably larger areas. Equipment with a low footprint is important as it enables better space optimization, especially where space is limited and the cost of land is high. Currently, there is no low-cost, low-footprint equipment and method for producing polymeric materials for aquaculture, in particular porous meshes, easily customized that can be used in the development of strategies for inducing a pathogen-suppressing environment in aquaculture systems.

These facts are described in order to illustrate the technical problem solved by the embodiments of this document.

### GENERAL DESCRIPTION

The present description concerns an extruded biodegradable material for aquaculture, in particular a mesh, equipment, production method and uses thereof.

For the scope and interpretation of the present disclosure, the term "mesh" or "porous mesh" should be construed as a material consisting of a network of filaments, in particular filaments arranged randomly among themselves, that is, non-woven.

In an embodiment, the extruded biodegradable material for aquaculture of the present disclosure enables the development of customized strategies for inducing a pathogen-suppressing environment in aquaculture systems. For this purpose, the material is produced to act simultaneously in at least two of the following applications: 1) controlled release of functional additives beneficial to the health and welfare of animals, such as, for example, chemical microbial modulators and phytobiotics; 2) promotion of spatial variability of the tank wall surface, leading to a greater variety of microenvironments, to favor more diverse microbial communities capable of removing nitrogenous nutrients (e.g., ammonia, nitrite, and nitrate) from the water; 3) induction of protective immune responses of aquatic animals through the controlled release of functional additives, such as inanimate microbial cells of pathogens; and 4) modulation of microbial communities of biofilms found on the surface of tanks and/or biofilters, and/or modulation of microbial communities of aquatic animals (present in superficial mucus and/or intestine).

Throughout the present disclosure, it is understood that a "pathogen-suppressing environment" is defined as an environment where microbial communities develop, but the pathogen (or pathogens) is not able to establish itself or persist, or the pathogen becomes established but does not cause disease, or the pathogen causes disease but the disease becomes progressively less severe [27].

In an embodiment, the methodology and equipment described in the present disclosure enable the total customization of the biodegradable material for aquaculture, particularly in mesh form, due to the possibility of tuning parameters such as temperature, rotation, direction, and speed of vertical displacement of the fiber collector, and amount and type of polymer (or polymers) and the functional additive (or additives) extruded. These characteristics enable the manufacture of a customized product for the needs of different cultures, an aspect impossible to achieve with the current state of the art.

In an embodiment, the biodegradable material for aquaculture is used as a filter medium in fluidized bed biofilters, fixed bed biofilters, or percolators. In another embodiment, the biodegradable material can be fixed to bottomless frames and subsequently attached to the surface of aquaculture tanks in flow-through systems (without biofilters).

In an embodiment, the functional additives are integrated into the biodegradable material for aquaculture individually. In another form of disclosure, functional additives are integrated in combination with other additives. Taking into account the diversity of animal species cultured in aquaculture systems and the unique characteristics of the microbiome of these systems, the composition of the additives in the biodegradable material is customized to meet the specific needs of each system. For that purpose, one or more of the three strategies below may be employed: 1) The *in situ* assessment of the ability of different materials, produced according to the present invention, to increase the abundance of potentially beneficial bacteria and suppress the development of potential pathogens in the biofilm of the biodegradable material, preferably a porous mesh, is carried out; 2) According to the history of disease outbreaks in aquaculture, one or more inanimate cells of pathogens (or antigens) are selected in the production of the composite material used in the biodegradable material, in particular, a mesh; 3) One or more additives are selected for incorporation into the materials, which have properties known to be beneficial for increasing resistance to stress and improving the health and welfare of the animal species of interest [25]. In an embodiment, additives are selected based on data available in the scientific literature and/or on pilot tests with different biodegradable materials, in particular porous meshes.

In an embodiment, the functional additives used are in their free form or immobilized in microparticles. The immobilization of additives in microparticles aims to protect the additives against degradation by oxidation and/or thermo-oxidation during the production process of the biodegradable material or prolong their release into cultivation systems.

The equipment, composition and production method of the material of the present disclosure, in particular the production of porous meshes, enable the development of customized strategies for inducing a pathogen-suppressing environment in aquaculture systems, enabling a high degree of customization, which, for example, makes possible the controlled release of functional additives, modulation of the biofilm microbiome and/or the microbiome of aquatic animals, induction of protective immune responses and promotion of animal welfare and health in aquaculture systems.

The present disclosure relates to an extruded biodegradable material for aquaculture comprising: 80 to 99% (w/w) of at least one biodegradable polymer; 1 to 20% (w/w) of at least one functional additive; wherein the at least one functional additive is selected from a list consisting of crude algae extracts, humic substances, dry biomasses of algae, dry biomass of cinnamon bark, inanimate microbial biomasses and functional organic substances, bacteriophages, or combinations thereof; preferably the at least one functional additive is selected from a list consisting of crude algae extracts, humic substances, dry biomasses of algae, dry biomass of cinnamon bark, inanimate microbial biomasses and functional organic substances, or combinations thereof.

In an embodiment, the crude algae extract is an aqueous extract, such as for example the extract "Ecklonia Bicyclis Powdered Extract: 25:1" marketed by Marine Technology Corp.

In an embodiment, the extruded biodegradable material is porous, with an average pore size of 6×10⁻⁴ mm³ to 2×10⁻³ mm³ and a distribution of 2 to 6 pores/mm³, measured by X-ray microtomography.

In an embodiment, the biodegradable polymer is selected from a list consisting of polycaprolactone, polylactic acid, polyhydroxyalkanoates, poly(lactic-co-glycolic acid), or combinations thereof.

In an embodiment, the at least one biodegradable polymer has an average molecular mass of 5000 to 250000 g/mol, preferably from 7500 to 225000 g/mol, more preferably from 10000 to 200000 g/mol.

In an embodiment, the at least one functional additive presents a granulometry with a median diameter (D₅₀) comprised between 10 µm and 200 µm. The median diameter can be obtained using different state of the art methods, such as sieving.

In an embodiment, the at least one functional additive is encapsulated within a microparticle.

In an embodiment, the microparticle is a chitosan microparticle or a microparticle of mixtures of chitosan with polyethylene glycol (PEG) or tripolyphosphate (TPF).

In an embodiment, the at least one functional additive is selected from a list consisting of crude extract of humic substances, humic acids, fulvic acids, crude extract of *Ecklonia cava,* crude extract of *Eisenia bicyclis,* crude extract of grape seeds, dry biomass of cinnamon bark, dry biomass of *Ecklonia cava* algae, dry biomass of *Eisenia bicyclis* algae, dry biomass of *Curcuma longo,* inanimate microbial biomass of *Vibrio harveyi,* inanimate microbial biomass of *Aeromonas salmonicida,* inanimate microbial biomass of *Streptococcus iniae,* inanimate microbial biomass of *Yersinia ruckeri,* inanimate microbial biomass of *Flavobacterium psychrophilum,* inanimate microbial biomass of *Renibacterium salmoninarum,* inanimate microbial biomass of *Francisella asiatica,* inanimate microbial biomass of *Tenacibaculum maritimum,* inanimate microbial biomass of *Tenacibaculum discolor,* inanimate microbial biomass of *Tenacibaculum soleae,* inanimate microbial biomass of *Photobacterium damselae,* inanimate microbial biomass of *Flexibacter columnaris,* inanimate microbial biomass of *Piscirickettsic salmonis,* inanimate microbial biomass of *Vibrio anguillarum,* inanimate microbial biomass of *Vibrio splendidus,* inanimate microbial biomass of *Flexibacter moritimus,* inanimate microbial biomass of *Edwardsiella tarda,* DL-alpha-tocopherol acetate functional organic substance, astaxanthin functional organic substance and taurine functional organic substance, or combinations thereof.

In an embodiment, the biodegradable polymer is a mixture of polycaprolactone with polylactic acid, in a mass ratio between polycaprolactone and polylactic acid ranging from 2:1 to 1:2, preferably being 1:1.

In an embodiment, the material is a mesh or a sheet.

In an embodiment, the material is a mesh obtainable by centrifugal extrusion.

In an embodiment, the largest side of the material is at least 0.5 m, preferably at least 1 m.

In an embodiment, the material dimensions range between 0.05 m × 1 m to 1 m × 2 m, preferably being 0.60 m × 1.60 m.

In an embodiment, the thickness of the material ranges between 3 and 5 mm.

The present disclosure further describes the use of the extruded biodegradable material for aquaculture disclosed in aquaculture, preferably as a microbiome modulator.

The present disclosure further describes a method for obtaining the extruded biodegradable material, comprising the following steps: mixing at least one biodegradable polymer with at least one functional additive, forming a composite material; hot extruding the composite material, wherein extrusion is done at a temperature ranging between 60°C and 250°C.

In an embodiment, the step of mixing at least one biodegradable polymer with at least one functional additive is carried out in a single spindle mixer or a double spindle mixer.

In an embodiment, the mixing step is carried out at a temperature comprised between 55°C and 210°C, preferably 150°C and 200°C.

In an embodiment, the extrusion step is carried out at a temperature comprised between 70°C and 210°C, more preferably between 100°C and 200°C.

In an embodiment, the method further comprises an additional step of pelletizing the composite material.

In an embodiment, the size of the composite material after pelletization is comprised between 2.5 and 3.5 mm, preferably from 2.75 to 3.25 mm, more preferably 3 mm.

In an embodiment, the extrusion step is a centrifugal extrusion, preferably at a rotational speed between 3000 and 4000 rpm, preferably 3500 rpm and 3700 rpm.

In one aspect, the present disclosure relates to an extruder for obtaining the extruded biodegradable material, comprising: a metal cylinder; a rotating extrusion head, rotatable around a rotation axis, for extruding the material; wherein the head is arranged inside the cylinder; and wherein the metal cylinder is movable parallel to the head rotation axis.

In an embodiment, the metal cylinder is movable along a lifting column powered by a motor.

In an embodiment, the extruder further comprises a thermal sensor targeting the rotating head.

In an embodiment, the metal cylinder is an aluminium cylinder.

In an embodiment, the diameter of the metal cylinder ranges from 30 to 65 cm, preferably from 50 to 65 cm.

In an embodiment, the height of the cylinder ranges between 0.5 m and 1 m.

In an embodiment, the cylinder moves along the lifting column at a speed of at least 1 mm/s, preferably between 1 mm/s and 10 mm/s.

In an embodiment, the extruder further comprises a microcontroller for controlling the movement of the metal cylinder along the lifting column.

An aspect of the present disclosure relates to an article comprising the disclosed extruded biodegradable material for aquaculture.

In an embodiment, the article is a fluidized bed biofilter, fixed bed biofilter, percolator, filter medium, or aquaculture tank.

In an embodiment, the biofilter comprises 10 to 100% (w/w) of the extruded biodegradable material, preferably 10 to 99% (w/w) of the extruded biodegradable material, most preferably 20 to 70% (w/w).

### BRIEF DESCRIPTION OF THE DRAWINGS

For an easier understanding, figures are herein attached, which represent preferred embodiments that are not intended to limit the object of the present description.
**Figure 1****:** Microtomography photographic representation of an embodiment of the biodegradable material for aquaculture of the present disclosure.

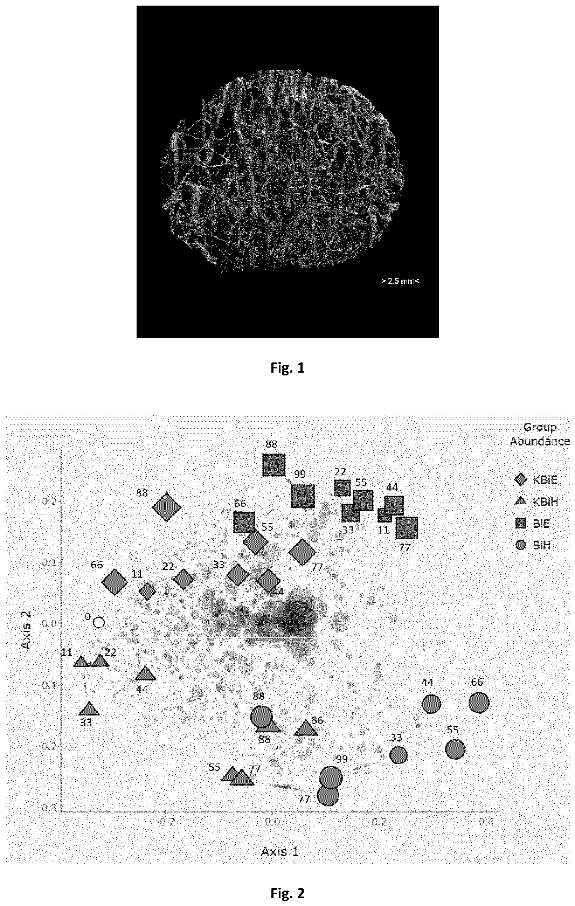

**Figure 2****:** Results of principal coordinate analysis (PCoA) of bacterial communities of K1 biofilter media and PCL-based porous polymeric mesh discs containing 20% (w/w) of functional additives [*Eisenia bicyclis* (EB) or humic substances (HS)] in experimental sea bass farming systems. Open circle: Bacterial communities of K1 filter medium without porous polymeric mesh discs (0%). Diamonds (KBiE): Bacterial communities of K1 filter media in biofilters with porous polymeric mesh discs with crude EB extract in different proportions of K1 discs/filter media. Squares (BiE): Bacterial communities of porous polymeric mesh discs containing crude EB extract in biofilters with different proportions of K1 discs/filter media. Triangles (KBiH): Bacterial communities of K1 filter media in biofilters with porous polymeric mesh discs with powdered HS in different proportions of K1 discs/filter media. Closed circles (BiH): Bacterial communities of porous polymeric mesh discs containing powdered HS in biofilters with different proportions of K1 discs/filter media. The proportion of K1 discs/filter media (w/w), between 0 and 99%, is represented by the number next to each symbol.

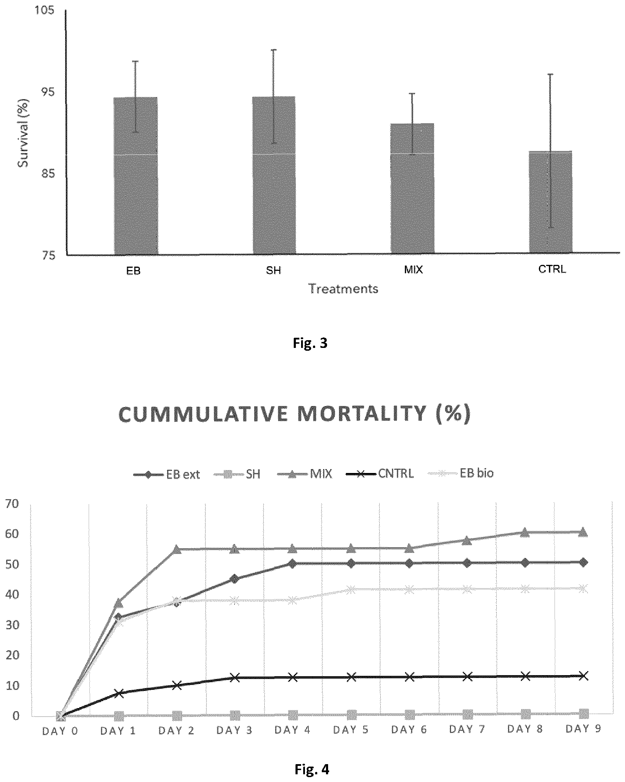

**Figure 3****:** Representation of the mean ± standard deviation (n=4) of survival (%) of sea bass in a pilot RAS system in aquaculture. CTRL: Cultivation in a standard system without the addition of porous polymeric mesh. EB: Cultivation in a standard system with the addition of 0.229 g/L of porous polymeric mesh with crude EB extract. SH: Cultivation in a standard system with the addition of 0.229 g/L of porous polymeric mesh with powdered HS. MIX: Cultivation in a standard system with the addition of 0.115 g/L of porous polymeric mesh with crude EB extract and 0.115 g/L of porous polymeric mesh with powdered HS.
**Figure 4****:** Representation of the average cumulative mortality (%) of sea bass, over 9 days, after the challenge with *Tenacibaculum maritimum* via immersion bath. The fish subjected to this test were previously reared for 83 days in systems with biofilters containing K1 filter media and biofilters containing multifunctional polymeric meshes with different additives or without additives. After inoculation, the fish were kept in independent systems with K1 biofilters previously matured with the respective polymeric meshes. Different letters represent significant differences between treatments (χ²<0.001). Cross (CNTRL): (n=40) fish cultured with biofilters with polymeric meshes without additives. Square (SH): (n=30) fish cultured with biofilters with multifunctional polymeric meshes with powdered HS. Diamond (EB ext): (n=40) fish cultured with biofilters with multifunctional polymeric meshes with crude EB extract. Asterisk (EB bio): (n=29) fish cultured with biofilters with multifunctional polymeric meshes with freeze-dried EB biomass. Triangle (MIX): (n=40) fish cultured with biofilters with polymeric meshes with powered HS and multifunctional polymeric meshes with freeze-dried EB biomass.
**Figure 5****:** Photograph of the extrusion equipment of the present disclosure (top left corner); photograph of the cylinder interior after extrusion of the composite material, resulting in the biodegradable material of the present disclosure (top right corner); embodiment of a biodegradable material as described in the present disclosure, in mesh (bottom panel).
**Figure 6****:** Embodiment of a biodegradable material as described in the present disclosure, in mesh, for use in aquariums (top panel); Embodiment of a biodegradable material as described in the present disclosure, in mesh, for use in aquaculture (bottom panel).
**Figure 7****:** Schematic representation of an embodiment of the extrusion equipment for obtaining a biodegradable polymeric mesh, as described in the present disclosure.
**Figure 8****:** Schematic representation of an embodiment of the extrusion equipment without the metal cylinder.
**Figure 9****:** Schematic representation of the front (A), side (B), rear (C), aerial (D), and isometric (E1 and E2) views of an embodiment of the extrusion equipment.
**Figure 10****:** Schematic representation of the front view of an embodiment of the extrusion equipment.
**Figure 11****:** Schematic representation of the side view of an embodiment of the extrusion equipment in detail on the metal cylinder support on a 1:5 scale.
**Figure 12****:** Schematic representation of the side view of an embodiment of the extrusion equipment with transparency.
**Figure 13****:** Schematic representation of the side view of an embodiment of the extrusion equipment without the cylinder in detail in the rotor, feeder and thermal sensor on a 1:3 scale.
**Figure 14****:** Schematic representation of the side view of the extrusion equipment in detail in the motor and composite feeding mechanism on a 1:2 scale.

### DETAILED DESCRIPTION

The present disclosure concerns an extruded biodegradable material for aquaculture, comprising at least one biodegradable polymer and at least one functional additive. The method of producing the biodegradable material, as well as articles comprising said material are also disclosed. One aspect of the present invention comprises an extruder for obtaining the extruded biodegradable material.

The present disclosure describes an equipment, composition and method of producing a biodegradable material for aquaculture, for controlled release of functional additives, in particular biodegradable porous meshes. Porous meshes are used in the controlled release of functional additives beneficial to the health and welfare of animals [e.g. chemical microbial modulators, phytobiotics, inanimate microbial cells and/or their components (antigens), and bacteriophages]. These functional additives are capable of performing one or more of the following functions: 1) pathogen suppression; 2) promote spatial variability of the tank surface (greater variety of microenvironments) to favor more diverse microbial communities capable of removing nitrogenous nutrients (e.g., ammonia, nitrite and nitrate) from the water; 3) induce the immune response of aquatic animals through the controlled release of inanimate microbial cells of pathogens and/or their components (e.g. antigens); and 4) modulation of the microbial communities of biofilms (surface of tanks and biofilters) and/or modulation of the microbial communities of aquatic animals (surface mucus and/or intestine).

In an embodiment, the extruded biodegradable material for aquaculture is a porous mesh. In a preferred embodiment, the mesh comprises at least one biodegradable polymer and at least one functional additive.

In an embodiment, the biodegradable polymer is selected from a list comprising polycaprolactone (PCL), polylactic acid (PLA), polyhydroxyalkanoate (PHA), poly(lactic-co-glycolic acid) (PLGA), or combinations thereof.

In an embodiment, the biodegradable polymer has an average molecular mass of 5000 to 250000 g/mol, preferably 7500 to 225000 g/mol, more preferably 10000 to 200000 g/mol, depending on the polymerization method and conditions.

In an embodiment, the porous meshes were analyzed by x-ray microtomography (SkyScan SCAN1275, Bruker). The average surface area (n=5) is 14171.15 +/- 2376.87 m²/m³, and the mesh has 4.0363 +/-1.4907 pores/m³, with an average pore size from 6×10⁻⁴ mm³ to 2×10⁻³ mm³.

In an embodiment, the rate of degradation of the biodegradable porous mesh can be adjusted, depending on its application, by adjusting the molecular weight of the base biodegradable polymer, the combination of different polymers, and the concentration of functional additives. In general, a higher molecular weight, higher concentration of biodegradable polymer, and lower concentration of additives result in slower degradation and vice versa.

In an embodiment, at least one functional additive can be incorporated into the biodegradable polymer alone or in combination with other additives. In an embodiment for better results, the additives are conjugated or encapsulated in microparticles before being incorporated into the composite material (wherein the composite material refers to the mixture of at least one biodegradable polymer and the at least one functional additive).

In an embodiment, the at least one functional additive is selected from a list comprising: humic (HA) and fulvic (FA) acids, inanimate biomass of microorganisms, algae or plants, bacteriophages, and algae or plant extracts (phytobiotics).

In an embodiment, phytobiotics are rich in bioactive compounds beneficial for animal production, such as, for example, alkaloids, phenolic compounds, and natural substances with antimicrobial or animal microbiome modulating activities.

In an embodiment, the algae-based additives originate from extracts or biomass of algae of the genera *Ecklonia* and *Eisenia.* Preferably *Ecklonia cava* (EC) and *Eisenia bicyclis* (EB).

In another embodiment, inanimate microbial cells, isolates originating from natural sources or collections of pre-existing cultures, from pathogens *Vibrio harveyi, Aeromonas salmonicida, Streptococcus iniae, Yersinia ruckeri, Flavobacterium psychrophilum, Renibacterium salmoninarum, Francisella asiatica, Tenacibaculum maritimum, Tenacibaculum discolor, Tenacibaculum soleae* and *Flexibacter columnaris, Piscirickettsia salmonis, Vibrio anguillarum, Vibrio splendidus, Flexibacter moritimus, Edwardsiella tordo* and/or components thereof (e.g., antigens) are used.

In an embodiment for better results, the at least one functional additive is selected from a list comprising: humic acids, fulvic acids, crude extract of *Ecklonia cava,* crude extract of *Eisenia bicyclis,* crude extract of grape seeds, dry biomass of cinnamon bark, dry biomass of *Ecklonia cava* algae, dry biomass of *Eisenia bicyclis* algae, dry biomass of *Curcuma longo,* inanimate microbial biomass of *Vibrio harveyi,* inanimate microbial biomass of *Aeromonas salmonicida,* inanimate microbial biomass of *Streptococcus iniae,* inanimate microbial biomass of *Yersinia ruckeri,* inanimate microbial biomass of *Flavobacterium psychrophilum,* inanimate microbial biomass of *Renibacterium salmoninarum,* inanimate microbial biomass of *Francisella asiatica,* inanimate microbial biomass of *Tenacibaculum maritimum,* inanimate microbial biomass of *Tenacibaculum discolor,* inanimate microbial biomass of *Tenacibaculum soleae,* inanimate microbial biomass of *Photobacterium damselae,* inanimate microbial biomass of *Flexibacter columnaris,* inanimate microbial biomass of *Piscirickettsic salmonis,* inanimate microbial biomass of *Vibrio anguillarum,* inanimate microbial biomass of *Vibrio splendidus,* inanimate microbial biomass of *Flexibacter moritimus,* inanimate microbial biomass of *Edwardsiella tarda,* DL-alpha-tocopherol acetate functional organic substance, astaxanthin functional organic substance and taurine functional organic substance. In an embodiment, the protection of functional additives more sensitive to degradation by oxidation or thermo-oxidation is further maximized by prior immobilization of the additive in microparticles, for example, chitosan microparticles or microparticles of mixtures of chitosan with other materials, such as polyethylene glycol (PEG) and tripolyphosphate (TPF)], before the production of the functional composites. The encapsulation or conjugation of the functional additive into microparticles protects the functional additives under the production conditions of the extruded biodegradable material. The extruded biodegradable material, in particular a porous mesh, containing additives immobilized in microparticles enables a more controlled release of the functional additives and reduces their degradation rate, increasing their effectiveness. Furthermore, immobilization in microparticles enables directing the action of functional additives in different compartments of aquaculture systems, such as water, biofilms, and the digestive tract or gills of fish.

In an embodiment, the process of producing the biodegradable material for aquaculture of the present disclosure involves mixing one or more base biodegradable polymers (for example, PCL and/or PLA) with functional additives (for example, humic acids, fulvic acids, algae or plant extracts, phytobiotics, inanimate microbial cells, and their components and/or bacteriophages) immobilized or not in microparticles, forming the composite material.

In an embodiment, the composition for preparing the biodegradable material comprises up to 20% (w/w) of functional additives, preferably 5% (w/w), 10% (w/w), 15% (w/w), 20% (w/w) relative to the weight of the base biodegradable polymer or polymer mixture.

In an embodiment, mixing the biodegradable polymer with the functional additives (composite material) is performed using a mixer, for example, a single spindle mixer or a double spindle mixer (which promotes better dispersion of the constituents). Subsequently, the composite material is pelletized, for example using a metal blade crusher or granulator. In the mixing process, relevant parameters are both the temperature inside the heating chamber and the residence time of the mixture in the chamber. These parameters also depend on the type of mixer. In a preferred embodiment, the residence time of the mixture in the chamber ranges between 8 and 10 minutes.

In another embodiment, mixing the biodegradable polymer or polymers and the functional additive or additives is performed directly in the equipment described in the present disclosure, using batch hoppers directly in the extrusion process. The mixer temperature is adjusted to the melting temperature of the polymer(s) used in producing the composite material.

In an embodiment, the materials are mixed using mixers at a temperature from 60°C to 140°C, preferably when PCL polymer is used.

In another embodiment, mixing is performed using mixers at a temperature of 155°C, preferably when PLA polymer or the combination of PLA and PCL is used. Additionally, after mixing, the composite is pelletized, wherein the pellet size ranges between 1 and 5 mm, preferably between 3 and 5 mm.

The present disclosure also refers to an equipment for hot centrifugal extrusion capable of extruding composite materials, resulting in the biodegradable material of the present embodiment in the form of a porous mesh, as described in the present disclosure. In particular, the disclosed extrusion equipment enables the manufacture of porous meshes in which the largest side of the material is at least 0.5 m, preferably at least 1 m.

In an embodiment, the equipment is capable of extruding the respective mesh through random deposition of the extruded material filaments, by centrifugal force, on the surface of the internal part of a metal cylinder, preferably an aluminium cylinder.

In an embodiment, the polymer extrusion process results in a porous and flexible mesh with a surface area greater than 10000 m²/m³ (Figure 1). As a comparative example, traditional Kaldness K1 filters have a surface area of 900 m²/m³.

In an embodiment, the dimensions of the obtained mesh are customizable by changing the distance and speed of vertical displacement of the metal cylinder. In another embodiment, the dimensions of the mesh obtained are customizable by changing the diameter of the metal cylinder. These characteristics enable the manufacture of meshes with dimensions between 0.05 m × 1 m and 1 m × 2 m.

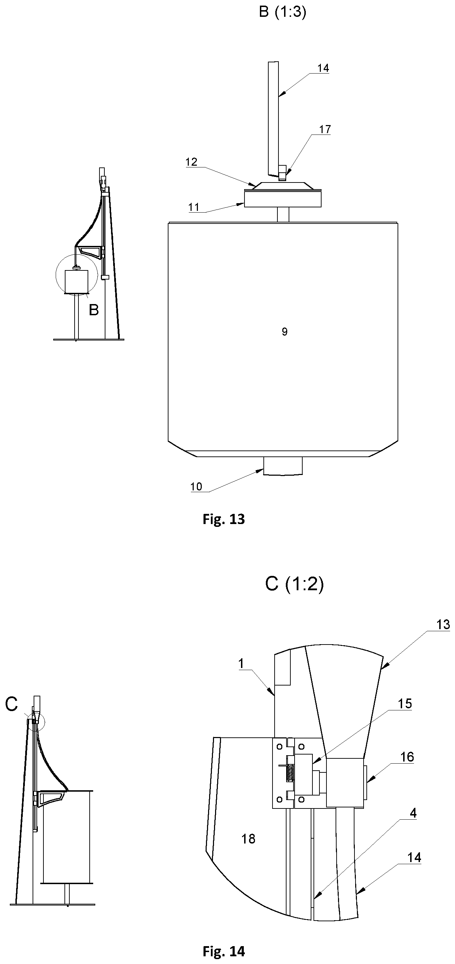

In an embodiment, the equipment enables centrifugal extrusion at different temperatures. In a preferred embodiment, extrusion temperature adjustment is done by a proportional integral derivative (PID) controller, with a contactless infrared thermal sensor directed to the rotor and heating component (Figure 13).

In an embodiment, the heating component increases the temperature through a resistance. In another embodiment, the heating component increases the temperature through induction. The temperature is adjusted according to the optimal melting temperature of at least one biodegradable polymer and the thermo-oxidative resistance of the functional additives used, thus enabling the manufacture of the biodegradable porous meshes with minimal losses of the multifunctional properties, such as pathogen suppression, induction of the immune response, or modulation of the microbiome.

In an embodiment, extrusion and printing of the filaments is done under the surface of a vertically moving cylinder. In this way, the formed meshes do not require additional processing to be used, although they can be cut or given different shapes (for example, cylindrical, conical, or others) depending on their specific purpose.

In an embodiment for the production of the extruded biodegradable material in mesh form, the composite material (i.e., the mixture of at least one biodegradable polymer and the at least one functional additive) is placed on a metal structure coupled to a rotor and extruded at a rotational speed between 3000 and 4000 rpm, preferably 3500 rpm and 3700 rpm. The metal structure coupled to a rotor is heated to a temperature between 60°C and 210°C to extrude the composite material on the internal surface of the metal cylinder.

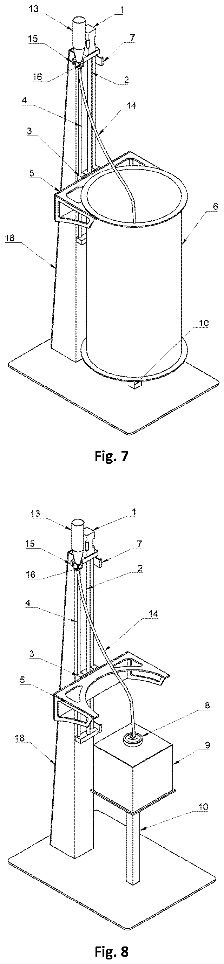

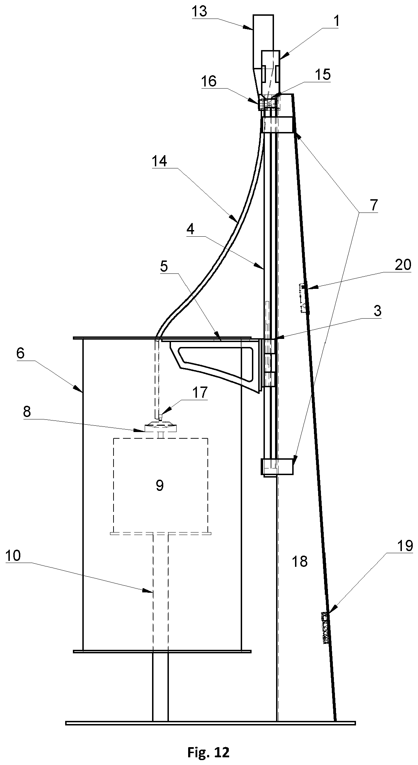

In an embodiment, the metal cylinder is supported by a lifting column (Figure 7 to 12). Examples of a lifting column include a linear guide with a lead screw, a hydraulic piston, a rack and pinion, or a transmission belt. The lifting column is powered by a motor, such as for example, a stepper motor or direct current motor with encoder, which enables vertical movement at a speed between 1 mm/s and 20 mm/s, preferably between 1 mm/s and 10 mm/s.

In an embodiment, the direction of the vertical movement can be changed in order to enable the porous mesh obtained to present different layers. The mesh can be composed of several layers of the same composite or different composites according to the specific needs of each target system.

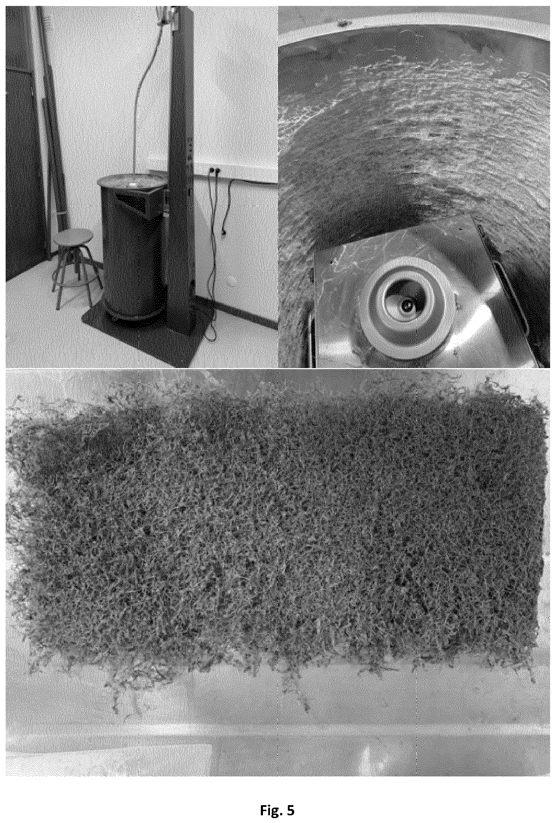

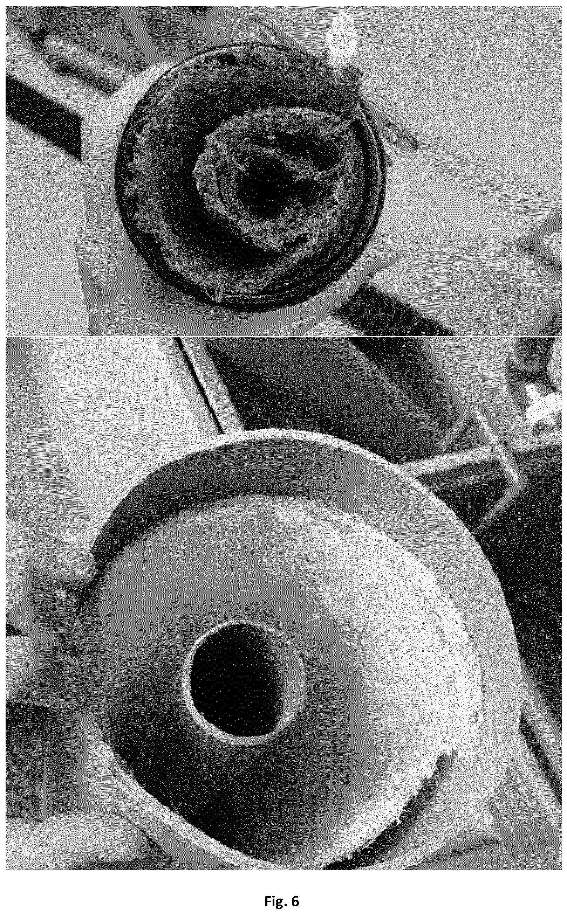

In an embodiment, functional composite materials are extruded and printed on a surface through centrifugal extrusion (Figure 5). This process results in a porous, rough, flexible mesh with a surface area greater than 10000 m²/m³ (Figure 5 and Figure 6), with variable dimensions, preferably up to 1 m × 2 m.

In an embodiment, the porous mesh produced from hot centrifugal extrusion can be subjected to changes in its shape or format, depending on the specific application required. For example, the mesh can be cut into discs, preferably discs with 5 cm in diameter and 2 mm thick, for use as biofiltration media in fluidized bed biofilters or percolators.

In another embodiment, frames containing the described porous mesh are attached to the surface of the wall of aquaculture tanks using clamps for the controlled release of functional additives. This strategy enables the use of porous meshes in flow-through aquacultures (for example, larviculture of aquatic animals).

The extruded biodegradable material described in the present disclosure, in particular in the form of a porous mesh, has application in the release of functional additives in the system to manipulate the immune response of produced animals, directly modulate microbial communities or further release functional additives beneficial to the health and welfare of animals. The porous mesh also contributes to increasing the spatial variability of the tank surface with positive effects on microbial diversity.

In an embodiment, the described polymeric mesh takes advantage of the biodegradable characteristics of PCL and PLA, enabling a controlled release of functional additives into the surrounding environment.

In a preferred embodiment, the biodegradable polymer is a combination of PCL, with an average molecular mass between 10000 and 80000 g/mol, with PLA, with an average molecular mass between 50000 and 200000 g/mol. Functional additives are incorporated into materials individually or in combination with other additives. For that purpose, one or more of the following two strategies are employed to select the functional additives to be used in the extruded biodegradable material and meet the specific needs of each aquaculture:
a) One or more additives are selected for incorporation into the materials, based on their beneficial properties. For that purpose, additives that present properties known to be beneficial to the health and welfare of the animal species produced are selected based on criteria established by competent regulatory bodies and/or recognized scientific literature in the area and/or on pilot tests carried out on the systems. For example, but not limited to, an *in situ* assessment of the capacity of different porous meshes produced according to the present disclosure with materials containing the selected functional additives is performed. Depending on how animals are produced, the meshes are attached to the surface of the tanks or introduced into the biofiltration means according to the present disclosure. The evaluation of the effects of porous meshes on animal performance and health and on the abundance of potentially beneficial bacteria and potential pathogens in the biofilm of the biofilters is carried out after 30 days. For that purpose, zootechnical analyses (e.g., animal performance and health), analysis of the biofilm microbiome formed on the biofilters and/or analysis of the microbiome of the animals tested are performed.
b) According to the history of disease outbreaks in the system, one or more pathogens are selected for the production of inanimate biomass and its subsequent incorporation into composite materials. The microorganisms used to produce inanimate biomass originate from the aquaculture system itself or from a pre-existing culture and are cultured in suitable culture media, such as those known to experts in the field of microbiology. The inanimate microbial biomass of one or more pathogens is then used in the production of porous meshes, as described in the present disclosure.

In an embodiment, functional composite materials are obtained by mixing at least one biodegradable polymer PCL and/or PLA and the functional additive in its free form or in microparticles using a mixer and subsequent pelletization. The mixing is done at a temperature between 60°C and 210°C, depending on the polymer or mixture of polymers used.

### Examples:

**Composite no.1** - It consists of polymer PCL or PLA (preferred formulation from 80% w/w to 99% w/w) and powdered humic acids (HA) (preferred formulation from 1% w/w to 20% w/w). Alternatively, the material consists of a mixture of PCL and PLA, preferably in equal proportions, with the same preferred polymer formulation and the functional additive. The composite is mixed preferably between 60°C and 210°C.
**Composite no.2** - It consists of polymer PCL or PLA (preferred formulation from 80% w/w to 99% w/w) and powdered fulvic acids (FA) (preferred formulation from 1% w/w to 20% w/w). Alternatively, the material consists of a mixture of PCL and PLA, preferably in equal proportions, with the same preferred polymer formulation and the functional additive. The composite is mixed preferably between 60°C and 210°C.
**Composite no.3** - It consists of polymer PCL or PLA (preferred formulation from 80% w/w to 99% w/w) and powdered dry biomass of EB alga (preferred formulation from 1% w/w to 20% w/w). Alternatively, the material consists of a mixture of PCL and PLA, preferably in equal proportions, with the same preferred polymer formulation and the functional additive. The composite is mixed preferably between 60°C and 210°C.
**Composite no.4** - It consists of polymer PCL or PLA (preferred formulation from 80% w/w to 99% w/w) and powdered dry biomass of EC alga (preferred formulation from 1% w/w to 20% w/w). Alternatively, the material consists of a mixture of PCL and PLA, preferably in equal proportions, with the same preferred polymer formulation and the functional additive. The composite is mixed preferably between 60°C and 210°C.
**Composite no.5** - It consists of the biodegradable polymer PCL (preferred formulation from 80% w/w to 99% w/w) and water-soluble powdered crude extract of bioactive compounds, extracted from EB alga, with at least 50% of phenolic compounds (preferred formulation from 1% w/w to 20% w/w). The composite is mixed preferably at 60°C.
**Composite no.6** - It consists of the biodegradable polymer PCL (preferred formulation from 80% w/w to 99% w/w) and water-soluble powdered crude extract of bioactive compounds, extracted from EC alga, with at least 50% of phenolic compounds (preferred formulation from 1% w/w to 20% w/w). The composite is mixed preferably at 60°C.
**Composite no.7** - It consists of the biodegradable polymer PCL (preferred formulation from 80% w/w to 99% w/w) and powdered dry biomass of *Curcuma longo* (preferred formulation from 1% w/w to 20% w/w). The composite is mixed preferably at 60°C.
**Composite no.8** - It consists of the biodegradable polymer PCL (preferred formulation from 80% w/w to 99% w/w) and the powdered DL-alpha-tocopherol acetate functional organic substance (51.5%) (preferred formulation from 1% w/w to 20% w/w). The composite is mixed preferably at 60°C.
**Composite no.9** - It consists of polymer PCL (preferred formulation from 80% w/w to 99% w/w) and powdered dry biomass of cinnamon bark (preferred formulation from 1% w/w to 20% w/w). The composite is mixed preferably at 60°C.
**Composite no.10** - It consists of the biodegradable polymer PCL (preferred formulation from 80% w/w to 99% w/w) and the powdered astaxanthin functional organic substance (preferred formulation from 1% w/w to 20% w/w). The composite is mixed preferably at 60°C.
**Composite no.11** - It consists of the biodegradable polymer PCL (preferred formulation from 80% w/w to 99% w/w) and the powdered taurine functional organic substance (preferred formulation from 1% w/w to 20% w/w). The composite is mixed preferably at 60°C.
**Composite no.12** - It consists of polymer PCL (preferred formulation from 80% w/w to 99% w/w) and the powdered crude extract of grape seeds (phytobiotic) (preferred formulation from 1% w/w to 20% w/w). The composite is mixed preferably at 60°C.
**Composite no.13** - It consists of polymer PCL (preferred formulation from 80% w/w to 99% w/w) and the dry inanimate microbial biomass of one or more pathogenic microbial species (preferred formulation from 0.1% w/w to 20% w/w). The composite is mixed preferably at 60°C. Preferably, but without limiting the present invention, the biomasses of the pathogens used belong to the species *Vibrio harveyi, Aeromonas salmonicida, Streptococcus iniae, Yersinia ruckeri, Flavobacterium psychrophilum, Renibacterium salmoninarum, Francisella asiatica, Tenacibaculum maritimum, Tenacibaculum discolor, Tenacibaculum soleae, Photobacterium damselae, Flexibacter columnaris, Piscirickettsia salmonis, Vibrio anguillarum, Vibrio splendidus, Flexibacter moritimus, Edwardsiella tarda.*

In an embodiment, for the isolation and production of biomass of different pathogen strains, the present disclosure uses isolates originating from natural sources or collections of pre-existing cultures of the intended microorganisms in specific commercial culture media and conventional microbiology techniques known in the field, which are in the public domain. Biomass production is carried out under constant stirring at 150 rpm until it reaches its stationary growth phase at 21°C. The determination of the stationary phase is made by measuring the optical density of the culture medium using spectrophotometry. Microbial biomass is harvested by centrifugation at 2500 g for 1 h at 4°C. The supernatant is discarded and the pellet is repeatedly resuspended in sterile saline solution (0.85%) and then harvested by centrifugation again for 3 times. The pellet obtained for each strain is then heated at 90°C for 5 minutes in a water bath. An aliquot of the pellet from each species is inoculated on agar plates containing their respective culture media to check the biomass viability. If necessary, the incubation time at 90°C can be extended depending on the species used. The inanimate biomasses are then freeze-dried for 24 h and stored at 4°C until use.

**Composite no.14** - It preferably consists of the PCL polymer (preferred formulation from 80% w/w to 99% w/w) and two or more functional additives (preferred formulation from 1% w/w to 20% w/w) in equal proportions. Preferably, but without limiting the present invention, the additives used belong to the groups consisting of crude extracts, dry algae biomass and functional organic substances. The composite is mixed preferably at 60°C.

**Composite no.15** - Composite materials manufactured with functional additives immobilized in microparticles.

In an embodiment, the additives belong to groups consisting of dry inanimate microbial biomass, crude extracts and functional organic substances. Chitosan microparticles and/or their combination with other materials [e.g. polyethylene glycol (PEG) and tripolyphosphate (TPF)] are used as carriers of functional additives and in the protection of additives during the production of composite materials.

In another embodiment, chitosan microparticles and their combination with other materials are used to immobilize additives, encompassing both hydrophilic and hydrophobic additives. Microparticles are used as carriers and in the protection of functional additives during the production of composite materials. After their production, hybrid microparticles are preferably obtained in a dry state by freeze-drying. The composite consists of the PCL polymer (preferred formulation from 80% w/w to 99% w/w) and at least one functional additive immobilized in the microparticles (preferred formulation from 1% w/w to 20% w/w) in equal proportions. The composite is mixed preferably at 60°C.

**Composite no.16** - Composite materials are preferably manufactured with PLA polymer (preferred formulation from 80% w/w to 99% w/w) and functional additives belonging to the groups consisting of dry inanimate microbial biomass, dry biomass, crude extract and functional organic substance (preferred formulation from 1% w/w to 20% w/w). This composite version is mixed preferably at 155°C.

**Composite no.17** - Composite materials manufactured with a mixture of PCL and PLA polymers in a 50/50 ratio (preferred formulation from 80% w/w to 99% w/w of the respective polymer mixture) and additives belonging to the groups consisting of dry inanimate microbial biomass, dry biomass, crude extract and functional organic substance (preferred formulation from 1% w/w to 20% w/w). This composite version is mixed preferably at 155°C.

In an embodiment, the composite examples described are extruded separately by hot centrifugation using the equipment described in the present disclosure (Figures 5 to 14). In an embodiment, this process results in a biodegradable and flexible porous mesh with high surface area (Figure 1). The mesh produced from hot centrifugal extrusion can be subjected to changes in its shape or format, depending on the specific application required.

In an embodiment, the mesh is cut into discs preferably 1 cm in diameter and between 2 mm and 3 mm thick, or 5 cm in diameter and between 3 mm and 5 mm thick for use as biofiltration media in fluidized bed biofilters.

In another embodiment, the mesh is used as a support media, without changing its shape in fixed bed biofilters or percolators. Preferably, the total amount of porous polymeric mesh per tank is less than or equal to 0.5 g/L.

In an embodiment, frames containing porous meshes according to the present disclosure are attached to the wall surface of aquaculture tanks with the aid of clamps for controlled release of functional additives. Preferably, bottomless frames made of acrylic, polyvinyl chloride (PVC) or high-density polyethylene are used. A sandwich containing in this order a porous nylon mesh, at least three porous meshes and one additional porous nylon mesh is attached to the inside of the frames with clamps. Preferably, the nylon mesh has a porosity of about 0.5 to 2 millimeters. Furthermore, the dimensions of the frames are, preferably, 50 cm by 50 cm and 5 to 10 mm thickness. Additionally, the total amount of porous meshes per tank is preferably less than or equal to 0.5 g/L.

In an embodiment, said device is used to attach the porous meshes to the wall of aquatic animal production tanks in different growth stages (e.g. larvae and juveniles). The use of the biodegradable porous mesh on the surface of the tanks aims to induce the creation of a pathogen-suppressing environment. For that purpose, meshes are produced to act simultaneously in at least two of the four applications: 1) Increase the spatial variability of the tank surface (greater variety of microenvironments), favoring the formation of more diverse microbial communities with greater capacity to improve water quality (nutrient cycling); 2) Induce the protective immune response crucial to all organisms, but especially in the larval stages and more advanced post-larval stages, through the controlled release of inanimate microbial cells from pathogens; 3) Modulate the microbial communities of biofilms and 4) Promote the controlled release of functional additives beneficial to the animal welfare and health.

In an embodiment, the functional additives affect the bacterial community of biofilter biofilms (Figure 2) and fish survival (Figure 3). Figure 2 shows a Principal Coordinates Analysis (PCoA) of the bacterial communities of commercial K1 filter media (comparative example) with and without the presence of porous mesh discs containing functional additives under increasing concentrations in an experimental sea bass culture system. Bacterial communities were evaluated separately on commercial K1 filter media and on porous mesh discs. The different biofilters contained different proportions (weight/weight) of porous mesh discs/K1 filter media (namely: 0%, 11%, 22%, 33%, 44%, 55%; 66%, 77%, 88%, 99%). Principal Coordinates Analysis (PCoA) shows two distinct groups of bacterial communities. The first group includes bacterial communities in biofilters containing porous mesh discs with crude EB extract (diamonds and squares), and the second group includes bacterial communities in biofilters containing porous mesh discs with humic substances (HS, NGHA PWD, Fulvicxcell, British Columbia, Canada) (closed triangles and circles). This suggests that microbial communities are distinct depending on the additive used in the material. These groups also differ from the point that represents the bacterial community in a biofilter with K1 filter media without porous meshes (open circle). In addition to modulating microbial communities, the use of the biodegradable material of the present invention, in particular a mesh, with HS and EB, showed a tendency to reduce mortality in production tanks and a more uniform mortality between different tanks (Figure 3). Greater uniformity in mortality across different tanks enables producers to more accurately predict how many fish will be lost and to adjust their operations accordingly, avoiding food waste and promoting the environmental and economic sustainability of the production system. On the other hand, uneven mortality can be an indicator of poor water quality and deterioration in fish health, forcing the producer to sacrifice all the fish in the tank, leading to greater economic losses. Therefore, decreased mortality and greater uniformity in production losses across different tanks can help producers improve the efficiency and sustainability of their operations and promote fish welfare.

In another embodiment, a resistance test to infection by *Tenacibaculum maritimum* was carried out (Figure 4). Sea bass were cultured in systems with the material of the present disclosure, preferably a mesh, with or without additives (namely HS, EB, and freeze-dried biomass of *Eisenia bicyclis*) for 83 days. Subsequently, the fish were infected with *T. maritimum.* The results of this test demonstrate that there was no mortality among fish cultured with meshes comprising HS (100% survival), with significant differences in relation to the control group and fish cultured with meshes containing crude EB extract, freeze-dried EB biomass or a freeze-dried biomass mixture of EB and HS.

In an embodiment, functional additives continuously added in their free form (for example: freeze-dried or powdered substances) are quickly eliminated through the skimmer, degraded through the action of ozone and UV and discarded during water renewal in the RAS systems. The use of biodegradable materials disclosed in the present invention, particularly in mesh form, in addition to providing the functional additive to the cultivation system continuously, also functions as a support and substrate for colonization by microorganisms potentially beneficial to the system. Thus, the biodegradable material, when continuously degrading, constantly provides the system with functional additives and, when as particles formed during the degradation process, they may remain longer in the system, thus implying greater resistance to degradation.

One aspect of the present disclosure comprises an extrusion equipment and method for producing the biodegradable material of the present disclosure, in the form of a polymeric mesh.

The present disclosure describes a low-cost equipment for producing porous meshes for aquaculture systems. The equipment uses a heat source combined with centrifugal force to extrude thermoplastics and produce fine fibers. The use of that type of equipment enables a relatively low production cost.

In an embodiment, the equipment is capable of performing the hot centrifugal extrusion of functional composite materials based on biodegradable polymers such as, for example, composite materials based on PCL and/or PLA.

In another embodiment, the equipment is capable of printing a porous mesh through the random deposition by centrifugal force of filaments from the extrudate of composite materials on the surface of the internal part of a metal cylinder, for example aluminium.

In an embodiment, the printing of composite materials is performed through random deposition by centrifugal force of filaments of the extruded material on the surface of the internal part of a metal cylinder. This process aims to produce a porous and flexible film with a high surface area, greater than 10000 m²/m³. Changes in the composition of the functional composite materials due to the use of different functional additives and/or different inclusion percentages of these additives result in the formation of films with different specific surface areas that are not limited by the present disclosure.

In an embodiment, the equipment enables the centrifugal extrusion at different temperatures, making possible the adjustment of the extrusion temperature according to the optimal melting temperature of different materials and the thermo-oxidative resistance of the functional additives used. The equipment enables the adjustment of the extrusion temperature through a PID controller with an infrared thermal sensor (Figure 13). The infrared sensor enables temperature readings without contact with the composite material or the equipment's rotor. It is also possible to adjust the reading to the emissivity of different composite materials used for reliable temperature readings. Preferably, the extrusion temperature is between 80°C and 150°C for materials containing PCL and between 155°C and 210°C for materials containing PLA or a mixture of the two polymers.

In an embodiment, the extrusion and printing of functional composite materials are carried out under the internal surface of a metal cylinder, preferably in aluminium with a diameter between 30 cm and 65 cm. The cylinder can move vertically with a preferred speed between 1 mm/s and 10 mm/s. The direction of the vertical movement can be changed to enable multifunctional biodegradable porous meshes to have different layers of the same composite or different composites according to the specific needs of each target system. For that purpose, the cylinder is supported by a lifting column (Figures 7 to 12). The lifting column is preferably composed of a linear guide with a lead screw, or alternatively by a rack and pinion, or even a transmission belt. The lifting motorization is preferably carried out using a stepper motor or alternatively using a direct current motor with an encoder. The characteristics of the lifting column enable a vertical displacement of at least 1 mm/s. The direction of the vertical movement can be changed to enable the multifunctional biodegradable porous meshes to have different layers. The meshes can be composed of several layers of the same composite or different composites according to the specific needs of each target system.

In a preferred embodiment, the metal cylinder can be heated to control the crystallization of the composite material, for example, with polyamide film. This feature enables the control of the composite material's crystallization temperature.

In an embodiment, the biodegradable porous mesh is collected from the equipment and used in its format and composition as a final product, although it can be cut, for example, into circles, or given different shapes such as cylindrical, conical or others, which depend on their specific purpose.

Figures 7 to 14 schematically represent the equipment of the present disclosure.

In an embodiment, the equipment comprises:
- Motorization 1 for the vertical displacement of the lifting metal cylinder, preferably a stepper motor or direct current motor with encoder.
- Lifting device **2** for the metal lifting cylinder **6**, preferably a linear guide with a lead screw, or a rack and pinion or even a transmission belt.
- Linear guide **4**
- Support **5** for the metal cylinder **6**, preferably in aluminium. This support connects the metal cylinder to the linear actuator, enabling the vertical movement.
- Metal cylinder **6**, preferably in aluminium. The dimensions are preferably 500 mm ø × 1000 mm.

Alternatively, dimensions are at least 300 mm ø × 200 mm, up to 650 mm ø × 1000 mm.
- Support for the centrifugal extrusion equipment, preferably a hollow support **10,** to facilitate wiring. Metal casing for the rotor motor, resistance, fuses, associated wiring and rotor support;
- Brush motor, preferably with at least 70 W of power, with a capacity of at least 1000 rpm, preferably from 3500 rpm to 5000 rpm.
- Resistance, preferably integrated into the rotor with preferably 1000 W. The resistance must be capable of maintaining constant temperatures up to 210°C.
- Rotor **11**, preferably made of aluminium, with head **12** also made of aluminium. The rotor can retain the composite material in its solid form. Small cracks between the rotor body and the head enable the composite to be released when it reaches the melting point. This process is mediated by the centrifugal force generated by the movement of the rotor.
- Feeding tube **14**, preferably curved in an S-shape to enable the vertical cylinder to rise without obstructions. The tube is preferably made of a material with low thermal conductivity, preferably steel or brass. In an embodiment, the inside of the tube should contain flaps tilted at approximately 135°. The flap must occupy less than 50% of the inside of the tube (for example, a tube with an internal diameter of 18 mm must have flaps with dimensions less than 12 mm in length, assuming a tilt of 135°).
- Feed motor **15**. The motor is preferably a direct current or a servo motor.
- Feeding device, preferably comprised of a 25 mm diameter spindle with a 5 mm pitch, in which the spindle is inserted into a metal cover. Alternatively, the feeding device consists of a double spindle when the additive and polymer are mixed directly in the equipment. Alternatively, the feeding device comprises a container capable of rotating 180°C on the vertical axis. Alternatively, the feeding device consists of a valve. Alternatively, the device consists of a piston. The feeding device is connected to a direct current motor, with a vertical rotation, capable of reversing direction, or to a stepper motor, or to a servo motor. Alternatively, the device is connected to a pneumatic piston. The feeding device is connected to a batch hopper.
- Limit switches **7** to reference the vertical movement. The limit switch also acts as a cut-off switch in case of emergency or unforeseen circumstances.
- Contactless infrared thermal sensor **17**, which enables emissivity adjustment to minimize error when using different materials. Preferably, the MLX90614-KSF-DCI sensor is used.
- Proportional Integral Derivative (PID) Controller for adjusting the desired temperature of the equipment. In an embodiment, the PID controller is connected to the infrared thermal sensor as feedback and to a 40 Amp solid state relay, which in turn is connected to the resistance.
- Microcontroller to manage the movement of the metal cylinder and the feeder. The microcontroller must enable the adjustment of the speed and direction of the motors.
- Screen **20**, preferably an LCD screen, which displays the desired temperature and the actual temperature.

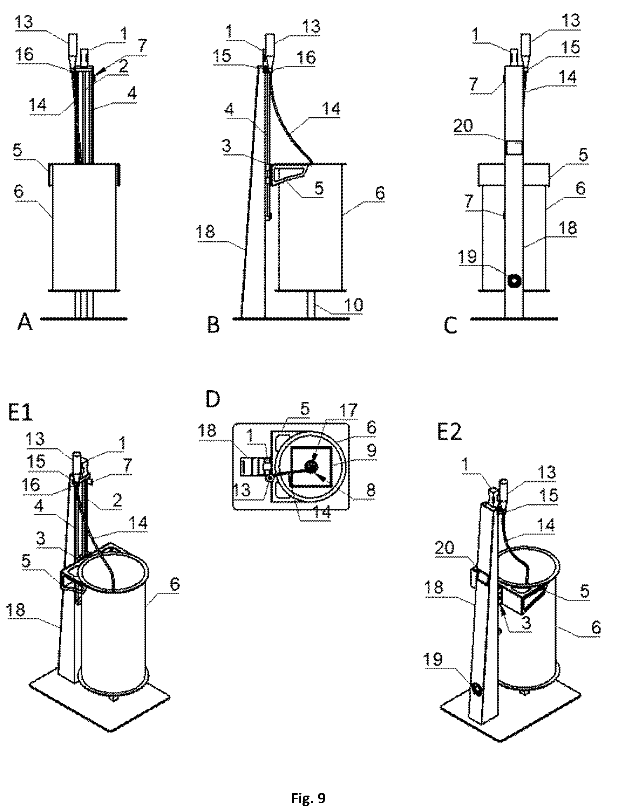

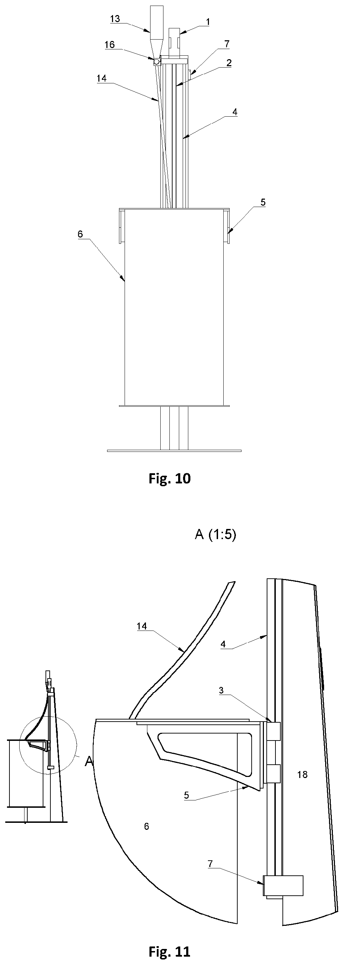

Figure 7 represents a general view of the extrusion equipment (extruder). Figure 8 represents a general view of the equipment without the metal cylinder. Figure 9 represents the equipment from a front, side, rear, aerial, and isometric view. Figures 10 to 14 illustrate the equipment in detail.

In an embodiment, a stepper motor **1**, or alternatively a direct current motor, is connected to a lead screw **2**, or alternatively to a rack and pinion, or alternatively to a transmission belt. This transmission is connected to a carriage **3** guided by a linear guide **4**, which enables the assembly and connection of the support **5** of the metal cylinder **6**, making its vertical displacement possible. Vertical displacement is limited by limit switches **7**. The extrusion equipment **8** consists of a brush motor and a resistance integrated into the rotor or, alternatively, a resistance external to the rotor, not integrated. The extrusion equipment and wiring are protected by a metal casing **9** and supported by a hollow metal tube **10** for wiring. The cracks between the rotor **11** and the head **12** enable the formation of fibers through centrifugal force. For feeding composite to the extruder, the equipment consists of a batch hopper **13**, connected to a feeding tube **14**, preferably a curved feeding tube, even more preferably, the tube is curved to enable the vertical displacement of the metal cylinder. The tube has internal flaps to reduce the speed of the composite fall. The composite supply is motorized by a feed motor **15**, preferably a servo motor, a stepper motor, a direct current motor, or a pneumatic motor. In order to dose the supply of the composite, the motor can be connected to a valve **16**, or to a spindle, or to a double spindle, or to a piston. The feeding tube also serves as an infrared thermal sensor **17** holder. The thermal sensor serves as feedback to the Proportional Integral Derivative (PID) Controller for temperature control. The vertical and supply equipment movement is controlled by microcontrollers. The electronic and electrical components, as well as the controllers are housed inside the support column **18**, the temperature of which is regulated by a fan **19**. The machine is operated by the touch screen **20**.

### Application examples

### 1 - Selection of functional additives and preparation of the biodegradable material (polymeric mesh)

In an embodiment, additives with beneficial properties for the health and welfare of animals and modulation of microbial communities are selected based on criteria established by competent regulatory bodies and/or recognized scientific literature in the area. Then, the porous mesh is produced according to this disclosure, containing in its formulation the selected functional additives and at least one biodegradable polymer, preferably PCL and/or PLA. The choice of polymer(s) for manufacturing the mesh and the option of whether or not to use microparticles for immobilizing the additives are based on the resistance of the additives to the material production temperature and the desired release rate.

In an embodiment of rapid release (up to 30 days) of functional additives that are not very resistant to the production temperature, PCL polymer and additives immobilized in chitosan microparticles are used. The produced mesh is then evaluated *in situ* in the aquaculture system. Depending on how the animals are produced, the meshes are attached to the surface of the tanks (flow-through) or introduced into biofiltration systems (recirculating aquacultures). The evaluation of the effects of porous meshes on animal performance and health, as well as the abundance of potentially beneficial bacteria and pathogens in the biofilm of biofilters, is carried out after a period of 30 days. In an embodiment, zootechnical analyses (e.g., animal performance and health) and biofilter microbiome analysis are carried out. The best performing porous meshes are subsequently implemented into the production system.

### 2 - Production of biodegradable porous polymeric mesh for controlled release of humic acids and its application in fluidized bed biofilters in recirculating aquaculture systems.

### (a) Production of the composite material.

In an embodiment, 1 kg of composite material is produced with 800 g of PCL (50000 g/mol) (Capa 6500D, Ingevity, SC, USA) and 200 g of powdered humic acid extract (NGHA PWD, Fulvicxcell, British Columbia, Canada), mixed using a mixer (Brabender plastograph EC with measuring mixer W30 EHT) (25 grams at a time) at 100 rpm, for 10 minutes at 60°C. After mixing, the composite is pelletized with a preferred size of 3 mm.

### (b) Extrusion of the material for the production of porous meshes.

In an embodiment, the composite material obtained is extruded and printed onto the inner surface of an aluminium cylinder through hot centrifugal extrusion. In a preferred embodiment, the composite material is extruded using the equipment of the present disclosure. The composite material is placed in the rotor feeder and extruded at a temperature of 140°C, with a rotational speed of 3500 rpm, on the inner surface of an aluminium cylinder moving vertically at a speed of 3 mm/s. In an embodiment, porous meshes are produced with dimensions of 60 cm × 160 cm, a thickness of 3 to 5 mm, and a weight of approximately 350 g each.

### (c) Post-production processing and application of porous meshes.

In an embodiment, in post-production processing, the porous meshes are cut into discs having 5 cm in diameter and used in biofilters already equipped with conventional filter media. The total amount of discs used is up to 0.5 g/L of the aquaculture system water capacity.

### 3 - Production of biodegradable porous meshes for controlled release of humic acids and biocomponents derived from the dry biomass of E. bicyclis and inanimate cells of T. discolor in fluidized bed biofilters of a recirculating aquaculture.

### (a) Production of the composite material.

In an embodiment, 1 kg of composite material is produced with 800 g of PCL (50000 g/mol) (Capa 6500D, Ingevity, SC, USA), 66.66 g of powdered humic acids (NGHA PWD, Fulvicxcell, British Columbia, Canada), 66.66 g of dry powdered biomass of *E. bicyclis* (Vita Actives, Dublin, Ireland) and 66.66 g of freeze-dried inanimate biomass of *T. discolor* pathogen (produced as described in the present disclosure), mixed using a mixer (Brabender plastograph EC with measuring mixer W30 EHT) (25 grams at a time) at 100 rpm, for 10 minutes at 60°C. After mixing, the composite is pelletized with a preferred size of 3 mm.

### (b) Extrusion of the material for the production of porous meshes.

The composite material obtained is extruded and printed on the internal surface of an aluminium cylinder through hot centrifugal extrusion using the equipment described in the present disclosure. The composite material is placed in the rotor feeder and extruded at a temperature of 140°C, with a rotational speed of 3500 rpm, on the inner surface of an aluminium cylinder moving vertically at a speed of 3 mm/s. On average, based on this process, porous meshes are produced with dimensions of 60 cm × 160 cm, a thickness of 3 to 5 mm, and a weight of approximately 350 g each.

### (c) Post-production processing and application of porous meshes.

In post-production processing, the porous meshes are cut into discs with a diameter of 5 cm and used in biofilters already equipped with conventional filter media. The total amount of discs used is up to 0.5 g/L of the aquaculture system water capacity.

### 4 - Production of biodegradable porous meshes for controlled release of humic acids, taurine and DL-alpha-tocopherol acetate in a flow-through larviculture system (without biofilters).

### (a) Production of the composite material.

In an embodiment, 1 kg of composite material is produced with 800 g of PCL (50000 g/mol) (Capa 6500D, Ingevity, SC, USA), 66.66 g of powdered humic acid extract (NGHA PWD, Fulvicxcell, British Columbia, Canada), 66.66 g of powdered taurine (Ajinomoto OmniChem, Mont-saint-Guibert, Belgium) and 66.66 g of powdered DL-alpha-tocopherol acetate (51.5%) (Vita Actives, Dublin, Ireland), mixed using a mixer (Brabender plastograph EC with measuring mixer W30 EHT) (25 grams at a time) at 100 rpm, for 10 minutes at 60°C. After mixing, the composite is pelletized with a preferred size of 3 mm.

### (b) Extrusion of the material for the production of porous meshes.

The composite material obtained is extruded and printed on the internal surface of an aluminium cylinder through hot centrifugal extrusion using the equipment described in the present disclosure. The composite material is placed in the rotor feeder and extruded at a temperature of 140°C, with a rotational speed of 3500 rpm, on the inner surface of an aluminium cylinder moving vertically at a speed of 3 mm/s. On average, based on this process, porous meshes are produced with dimensions of 60 cm × 160 cm, a thickness of 3 to 5 mm, and a weight of approximately 350 g each.

### (c) Post-production processing and application of porous meshes.

In post-production processing, the porous meshes produced are cut into square shapes with dimensions of 50 cm × 50 cm and fixed to flat bottomless PVC frames with the same dimensions previously described in this invention. A sandwich containing, in this order, a porous nylon mesh (with pores of 2 mm in diameter) with the same dimension as the frame, at least one porous mesh, and one more porous nylon mesh is attached to the inside of the frames with clamps. Then, the frames containing the porous meshes are attached to the surface of the tank wall close to the water inlet using fixing clamps and maintained in the system until the larvae reach 20 days after eclosion. The total amount of porous mesh used in the tanks corresponds to 0.5 g/L of the water capacity of each larviculture tank.

The term "comprises" or "comprising" when used herein is intended to indicate the presence of stated features, elements, integers, steps, and components, but not to preclude the presence or addition of one or more other features, elements, integers, steps and components, or groups thereof.

The present invention is, of course, in no way restricted to the embodiments described in this document, and a person with average knowledge in the field will be able to foresee many possibilities for modification thereof and for replacing technical characteristics with equivalent ones, depending on the requirements of each situation, as defined in the appended claims.

The following claims define additional embodiments of the present description.

### REFERENCES

[1] Martins P., Cleary D.F.R., Pires A.C.C, Rodrigues A.M., Quintino V., Calado R., Gomes N.C.M (2013), Molecular Analysis of Bacterial Communities and Detection of Potential Pathogens in a Recirculating Aquaculture System for Scophthalmus maximus and Solea senegalensis. PLoS ONE. 8(11): e80847.
[2] King R.K., Flick G.J.Jr., Pierson M.D., Smith S.A., Boardman G.D., Coale C.W.J. (2004), Identification of bacterial pathogens in biofilms of recirculating aquaculture systems. Journal of Aquatic Food Product Technology 13, 125-133.
[3] Louvado A., Cleary D.F.R., Pereira L.F., Coelho F.J.R.C., Pousão-Ferreira P., Ozório R.O.A., Gomes N.C.M. (2021), Humic substances modulate fish bacterial communities in a marine recirculating aquaculture system. Aquaculture 544: 737121.
[4] Meinelt T., Kroupova H., Stüber A., Rennert B., Wienke A., Steinberg C.E.W. (2010), Can dissolved aquatic humic substances reduce the toxicity of ammonia and nitrite in recirculating aquaculture systems? Aquaculture 306.1-4: 378-383.
[5] Gao, X., Zhang, H., Xu, Y., Ni, Q., Zhang, Y., Tan, H., & Gu, C. (2022). Effects of humic acid on the nitrogen utilization efficiency and microbial communities in aquaponic systems. Aquaculture 547, 737475.
[6] Yamin G., Falk R., Avtalion R. R., Shoshana N., Ofek T., Smirnov R., Rubenstein G., van Rijn, J. (2017). The protective effect of humic-rich substances on atypical Aeromonas salmonicida subsp. salmonicida infection in common carp (Cyprinus carpio L.). Journal of fish diseases, 40(12), 1783-1790.
[7] Leike T., Steinberg C.E.W, Pan B., Perminova I.V., Meinelt T., Knopf K., Kloas W. (2021). Phenol-rich fulvic acid as a water additive enhances growth, reduces stress, and stimulates the immune system of fish in aquaculture. Scientific Reports 11, 174.
[8] Barnes A.C., Rudenko O., Landos M., Dong M.T., Lusiastuti A., Phuoc L.H., Delamare-Deboutteville (2022), Autogenous vaccination in aquaculture: A locally enabled solution towards reduction of the global antimicrobial resistance problem. Reviews in Aquaculture, 14: 907- 918.
[9] Carballo C., Pinto P.I.S., Mateus A.P., Berbel C., Guerreiro C.C., Martinez-Blanch J.F., Codoñer F.M., Mantecon L., Power D.M., Manchado M. (2019), Yeast β-glucans and microalgal extracts modulate the immune response and gut microbiome in Senegalese sole (Solea senegalensis). Fish & Shellfish Immunology 92, 31-39.
[10] Jana P., Karmakar S., Roy U., Paul M. and Bera A.K.S. (2018), Phytobiotics in aquaculture health management: A review. Journal of Entomology and Zoology Studies, 6(4), pp.1422-1429.
[11] Chong C., Low C. (2019), Synthetic antibody: prospects in aquaculture biosecurity. Fish and Shellfish Immunology. 86 361-367.
[12] Sousa J.M.G., Louvado A., Coelho F.J.R.C., Oliveira V., Oliveira H., Cleary D.F.R., Gomes N.C.M. (2022), In vitro study of the modulatory effects of heat-killed bacterial biomass on aquaculture bacterioplankton communities. Scientific Reports 12, 19699.
[13] Silva Y.J., Moreirinha C., Pereira C., Costa L., Rocha R.J.M., Cunha A., Gomes N.C.M., Calado R., Almeida A. (2016), Biological control of Aeromonas salmonicida infection in juvenile Senegalese sole (Solea senegolensis) with Phage AS-A. Aquaculture 450, 225-233).
[14] Pati R., Shevstov M., Sonawane A. (2018), Nanoparticle vaccines against infectious diseases. Frontiers in Immunology, vol.9.
[15] Sheth R.U., Cabral V., Chen S.P., Wang H.H. (2016), Manipulating bacterial communities by in situ microbiome engineering. Trends in Genetics. 32, 189-200.
[16] Davani-Davari D., Negahdaripour M., Karimzadeh I., Seifan M., Mohkam M., Masoumi S. J., Berenjian A., Ghasemi Y. (2019), Prebiotics: definition, types, sources, mechanisms, and clinical applications. Foods. 8, 92.
[17] Louvado, A., Cleary, D.F.R., Pereira, L.F., Coelho, F.J.R.C., Pousão-Ferreira, P., Ozório, R.O. and Gomes, N.C.M., 2021. Humic substances modulate fish bacterial communities in a marine recirculating aquaculture system. Aquaculture 737121.
[18] da Silva M.S.R.D.A., dos Santos B.D.M.S., da Silva C.S.R.D.A., da Silva C.S.R.D.A., Antunes L.F.D.S., dos Santos R.M., Santos C.H.B., Rigobelo E.C. (2021), Humic Substances in Combination With Plant Growth-Promoting Bacteria as an Alternative for Sustainable Agriculture. Frontiers in Microbiology 3025.
[19] Pattanashetti N.A., Heggannavar G.B., Kariduraganavar M.Y. (2017), Smart Biopolymers and their Biomedical Applications. Procedia Manufacturing 12, 263-279.
[20] Biswas M.C., Jony B., Nandy P.K., Chowdhury R.A., Halder S., Kumar D., Ramakrishna S., Hassan M., Ahsan M.A., Hoque M.E. and Imam M.A. (2021), Recent advancement of biopolymers and their potential biomedical applications. Journal of Polymers and the Environment, pp.1-24.
[21] Li Y., Huang Y., Wang F., Liang W., Yang H., Wu D. (2022), Fabrication of acrylic acid modified graphene oxide (AGO)/acrylate composites and their synergistic mechanisms of anticorrosion and antifouling properties. Progress in Organic Coatings 163, 106655.
[22] Perez-Soto N., Moule L., Crisan D.N., Insua I., Taylor-Smith L.M., Voelz K., Fernandez-Trillo F., Krachler A.M. (2017), Engineering microbial physiology with synthetic polymers: cationic polymers induce biofilm formation in Vibrio cholerae and downregulate the expression of virulence genes. Chemical Science. 8, 5291-5298.
[23] Singer G., Besemer K., Schmitt-Kopplin P., Hödl I., Battin T.J.(2010), Physical heterogeneity increases biofilm resource use and its molecular diversity in stream mesocosms. PLoS One 5, p. e9988.
[24] Cardinale, B.J.. Biodiversity improves water quality through niche partitioning. Nature, 472 (2011), pp. 86-89.
[25] Pérez-Sánchez T., Mora-Sánchez B., Balcázar J.L. (2018), Biological approaches for disease control in aquaculture: advantages, limitations and challenges. Trends in microbiology, 26(11), pp.896-903.
[26] Zammuto V., Rizzo M.G., Spanò A., Genovese G., Morabito M., Spagnuolo D., Capparucci F., Gervasi C., Smeriglio A., Trombetta D., Guglielmino S., Nicoló M.S., Gugliandolo C. (2022), In vitro evaluation of antibiofilm activity of crude extracts from macroalgae against pathogens relevant in aquaculture. Aquaculture 549, 737729.
[27] Baker K. and Cook R.J. (1974). Biological control of plant pathogens. New York, NY: WH Freeman and Company.

## Claims

1. Extruded biodegradable material for aquaculture comprising:
80 to 99% (w/w) of at least one biodegradable polymer, preferably a biodegradable polymer with an average molecular mass from 5000 to 250000 g/mol;
1 to 20% (w/w) of at least one functional additive;
wherein the at least one functional additive is selected from a list consisting of crude algae extracts, humic substances, dry biomasses of algae, dry biomass of cinnamon bark, inanimate microbial biomasses, and functional organic substances, bacteriophages, or combinations thereof.

2. Extruded biodegradable material for aquaculture according to the preceding claim wherein the material is porous, with an average pore size from 6×10⁻⁴ mm³ to 2×10⁻³ mm³ and a distribution of 2 to 6 pores/mm³, measured by X-ray microtomography.

3. Extruded biodegradable material for aquaculture according to any one of the preceding claims wherein the biodegradable polymer is selected from a list consisting of polycaprolactone, polylactic acid, polyhydroxyalkanoates, poly(lactic-co-glycolic acid), or combinations thereof, preferably wherein the biodegradable polymer is a mixture of polycaprolactone with polylactic acid, in a mass ratio between polycaprolactone and polylactic acid ranging from 2:1 to 1:2, preferably being 1:1.

4. Extruded biodegradable material for aquaculture according to any one of the preceding claims wherein the at least one functional additive is encapsulated within a microparticle, preferably a chitosan microparticle or microparticle of mixtures of chitosan with polyethylene glycol or tripolyphosphate.

5. Extruded biodegradable material for aquaculture according to any one of the preceding claims wherein the at least one functional additive is selected from a list consisting of crude extract of humic substances, humic acids, fulvic acids, crude extract of *Ecklonia cava,* crude extract of *Eisenia bicyclis,* crude extract of grape seeds, dry biomass of cinnamon bark, dry biomass of *Ecklonia cava* algae, dry biomass of *Eisenia bicyclis* algae, dry biomass of *Curcuma longo,* inanimate microbial biomass of *Vibrio harveyi,* inanimate microbial biomass of *Aeromonas salmonicida,* inanimate microbial biomass of *Streptococcus iniae,* inanimate microbial biomass of *Yersinia ruckeri,* inanimate microbial biomass of *Flavobacterium psychrophilum,* inanimate microbial biomass of *Renibacterium salmoninarum,* inanimate microbial biomass of *Francisella asiatica,* inanimate microbial biomass of *Tenacibaculum maritimum,* inanimate microbial biomass of *Tenacibaculum discolor,* inanimate microbial biomass of *Tenacibaculum soleae,* inanimate microbial biomass of *Photobacterium damselae,* inanimate microbial biomass of *Flexibacter columnaris,* inanimate microbial biomass of *Piscirickettsic salmonis,* inanimate microbial biomass of *Vibrio anguillarum,* inanimate microbial biomass of *Vibrio splendidus,* inanimate microbial biomass of *Flexibacter moritimus,* inanimate microbial biomass of *Edwardsiella tarda,* DL-alpha-tocopherol acetate functional organic substance, astaxanthin functional organic substance and taurine functional organic substance, or combinations thereof.

6. Extruded biodegradable material for aquaculture according to any one of the preceding claims wherein the material is a mesh or a sheet, preferably a mesh obtainable by centrifugal extrusion.

7. Extruded biodegradable material for aquaculture according to any one of the preceding claims wherein the largest side of the material is at least 0.5 m, preferably at least 1 m, preferably wherein the material dimensions range between 0.05 m × 1 m and 1 m × 2 m; and/or the material thickness ranges between 3 mm and 1 cm.

8. Use of the extruded biodegradable material for aquaculture described in any one of the preceding claims in aquaculture, preferably as a microbiome modulator.

9. Method for obtaining the extruded biodegradable material described in any one of claims 1 to 7, comprising the following steps:
mixing at least one biodegradable polymer with at least one functional additive, forming a composite material, preferably in a single spindle mixer or in a double spindle mixer;
optionally, pelletizing the composite material, wherein the size of the composite material after pelletization is comprised between 2.5 and 3.5 mm, preferably from 2.75 to 3.25 mm, more preferably being 3 mm;
hot extruding the composite material, wherein extrusion is performed at a temperature ranging between 60 °C and 250 °C, and/or wherein the extrusion step is a centrifugal extrusion, preferably at a rotational speed between 3000 and 4000 rpm, preferably 3500 rpm and 3700 rpm.

10. Method according to the preceding claim wherein the mixing step is performed at a temperature comprised between 55 °C and 210 °C, preferably 150 °C and 200 °C; and/or the extrusion step is performed at a temperature comprised between 70 °C and 210 °C, more preferably between 100 °C and 200 °C.

11. Extruder for obtaining the extruded biodegradable material of any one of claims 1 to 7, comprising:
a metal cylinder, preferably an aluminium cylinder;
a rotating extrusion head, rotatable around a rotation axis, for extruding the material;
wherein the head is arranged inside the cylinder; and
wherein the metal cylinder is movable parallel to the head rotation axis.

12. Extruder according to the preceding claim wherein the metal cylinder is movable along a lifting column powered by a motor, preferably at a speed of at least 1 mm/s, more preferably between 1 mm/s and 10 mm/s.

13. Extruder according to any one of claims 11 to 12 further comprising a thermal sensor directed to the rotating head and/or a microcontroller to control the movement of the metal cylinder.

14. Extruder according to any one of the preceding claims 11 to 13 wherein the diameter of the metal cylinder ranges from 30 to 65 cm and/or the height of the cylinder ranges between 0.5 m and 1 m, preferably being 50 to 65 cm in diameter.

15. Article comprising the extruded biodegradable material for aquaculture described in any one of the claims 1 to 7, preferably wherein the article is a fluidized bed biofilter, fixed bed biofilter, percolator, filter medium, or aquaculture tank, most preferably wherein the biofilter comprises 10 to 99% (w/w) of the extruded biodegradable material, preferably 20 to 70% (w/w).
